# EUROPEAN PATENT APPLICATION

(11) **EP 4 768 898 A1**
(43) Date of publication of application: **01.07.2026**
(21) Application number: 25225448.7
(22) Date of filing: 19.12.2025
(51) Int. Cl.: G01N 23/04

(54) **X-RAY INSPECTION DEVICE**

(30) Priority: 27.12.2024 JP 2024232372
(71) Applicant: Ishida Co., Ltd., Kyoto-shi Kyoto 606-8392 (JP)
(72) Inventor: YOSHIDA, Keisuke, Ritto-shi, Shiga, 520-3026 (JP)
(74) Representative: Global IP Europe Patentanwaltskanzlei

(57) **Abstract**

Provided is an X-ray inspection device (1) capable of accurately reproducing a test piece with virtual foreign object in a simulated defective image.

[Solving method]

An X-ray inspection device (1) includes: a conveyor (5) configured to convey an article; an X-ray irradiation unit (6) configured to irradiate the article conveyed by the conveyor (5) with X-rays; an X-ray detection unit (7) configured to detect the X-rays; and a controller (10) configured to generate an inspection image including the article from a detection result of the X-rays detected in the X-ray detection unit (7), perform an inspection to determine whether foreign object is included in the article based on the inspection image, generate a simulated defective image including virtual foreign object by changing a pixel value of some pixels constituting the inspection image, and check reliability of the inspection based on the simulated defective image. The controller (10) changes the pixel value based on an attenuation rate of the X-rays of a substance corresponding to the virtual foreign object.

## Description

### Technical Field

The present invention relates to an X-ray inspection device.

### Background Art

A known X-ray inspection device includes a conveyance unit that conveys an article, an irradiation unit that irradiates the article conveyed by the conveyance unit with X-rays, a sensor that detects the X-rays transmitted through the article, and a control unit that generates an inspection image (X-ray transmission image) from the X-rays detected by the sensor and inspects the article based on the inspection image (e.g., Patent Document 1).

### Citation List

### Patent Literature

Patent Document 1: JP 2005-3481 A

### Summary of Invention

### Technical Problem

In a production site in which the above-described X-ray inspection device is used, reliability of an inspection is checked during normal operation in a production line, in terms of whether a target foreign object is correctly detected by the X-ray inspection device is determined by feeding a test piece to the production line at random, and so on. It is a large work burden for a worker to check the reliability of the inspection by preparing an article sample attached with a test piece and feeding the article sample to the production line. Since the inspection is performed during the production of the articles, there is a risk that the test piece will be mixed into the articles as foreign object. Thus, in recent years investigations have been conducted into generating a simulated defective image including virtual foreign object and checking the reliability of an inspection based on the simulated defective image. However, for example, when an image of foreign object imaged in advance or an image of a circle uniformly filled with black is used as the virtual foreign object, it was not always possible to accurately reproduce the test piece with the virtual foreign object in the simulated defective image.

An object of the present invention is to provide an X-ray inspection device capable of accurately reproducing a test piece with virtual foreign object in a simulated defective image.

### Solution to Problem

(1) An X-ray inspection device according to one aspect of the present invention includes: a conveyance unit configured to convey an article; an irradiation unit configured to irradiate the article conveyed by the conveyance unit with X-rays; a sensor unit configured to detect the X-rays; an image generation unit configured to generate an inspection image including the article from a detection result of the X-rays detected in the sensor unit; an inspection unit configured to perform an inspection to determine whether foreign object is included in the article based on the inspection image; and a checking unit configured to generate a simulated defective image including virtual foreign object by changing a pixel value of some pixels constituting the inspection image and perform checking of reliability of the inspection based on the simulated defective image. The checking unit changes the pixel value based on an attenuation rate of the X-rays of a substance corresponding to the virtual foreign object.
   In the X-ray inspection device according to one aspect of the present invention, the checking unit generates the simulated defective image including the virtual foreign object by changing the pixel value of some of the pixels constituting the inspection image. The checking unit changes the pixel value based on the attenuation rate of the X-rays of a substance corresponding to the virtual foreign object. Accordingly, since the virtual foreign object is rendered in the simulated defective image in accordance with the attenuation rate of the X-rays of the substance, a test piece can be more accurately reproduced with the virtual foreign object in the simulated defective image, as compared with a case in which, for example, an image of foreign object imaged in advance or an image of a circle uniformly filled with black is used as the virtual foreign object.
(2) In (1) described above, the checking unit may change the pixel value based on a transmission distance of the X-rays in the virtual foreign object, a density of the substance or a mass absorption coefficient of the substance. In that case, the transmission distance, according to the type, shape and the like of a substance designated as the virtual foreign object, the density of the substance or the mass absorption coefficient of the substance is used, and thus the attenuation rate of the X-rays of the substance in the simulated defective image can be calculated with higher accuracy.
(3) In (2) described above, the transmission distance may be a length of a portion of virtual straight line connecting the irradiation unit and the sensor unit and passing through the virtual foreign object. In that case, the transmission distance can be geometrically calculated.
(4) In any one of (1) to (3) described above, the sensor unit may include a plurality of detection elements arranged along an intersecting direction horizontally intersecting a conveying direction of the conveyance unit, and the checking unit may change the pixel value based on an attenuation rate of the X-rays calculated according to each of the plurality of detection elements. In that case, since the virtual foreign object can be rendered at a resolution corresponding to the inspection image, the test piece can be easily reproduced with the virtual foreign object with high accuracy.
(5) In any one of (1) to (4) described above, the checking unit may store information on a plurality of pieces of the virtual foreign object different from each other in size, shape or density and may change the pixel value based on the attenuation rate of the X-rays of a substance corresponding to virtual foreign object selected from the plurality of pieces of virtual foreign object. In that case, a simulated defective image corresponding to any of the plurality of pieces of virtual foreign object stored in advance can be generated to perform the checking.
(6) In any one of (1) to (5) described above, the checking unit may determine that there is a problem in the reliability of the inspection if an inspection result indicating that no foreign object is included is obtained by the inspection based on the simulated defective image. In that case, it is possible to detect such an abnormality that it is determined that no foreign object has been included, although it should be determined in a normal situation that foreign object has been included.
(7) In any one of (1) to (6) described above, the checking unit may generate the simulated defective image and automatically perform the checking when a preset time has elapsed or when a preset number of articles have been inspected. In that case, the checking of the reliability of the inspection is automatically executed in accordance with a preset rule. As a result, the burden on an operator can be reduced.
(8) In any one of (1) to (7) described above, the checking unit may extract an outer shape of the article included in the inspection image and generate the simulated defective image by changing a pixel value of some of the pixels inside the outer shape extracted. In that case, the simulated defective image generated by the checking unit is an image close to an inspection image which is acquired when foreign object is mixed in the article produced in the production line. As a result, the checking of the reliability of the inspection is performed simulatively based on the inspection image which is actually acquired when foreign object is mixed in the article produced in the production line, and thus the accuracy of the checking can be improved.
(9) In any one of (1) to (8) described above, the checking unit may control a sorting unit to sort the article in a direction different from a direction in which the article that is normal without the foreign object is sorted by the sorting unit during non-execution of the checking if an inspection result indicating that the foreign object is not included is obtained by the inspection based on the inspection image without the virtual foreign object during execution of the checking, and may stop conveyance of the article by the conveyance unit if an inspection result indicating that the foreign object is not included is obtained by the inspection based on the simulated defective image during execution of the checking. In that case, the normal article that has been determined as not including the foreign object during the execution of the checking can be sorted separately from the normal article during the non-execution of the checking. When it is determined that the inspection has not been correctly performed, the conveyance by the conveyance unit is stopped. This can prevent the article including the foreign object from being processed as a normal article after the checking.

### Advantageous Effects of Invention

According to one aspect of the present invention, it is possible to accurately reproduce the test piece with the virtual foreign object in the simulated defective image.

### Brief Description of Drawings

FIG. 1 is a configuration diagram illustrating an X-ray inspection device according to an embodiment.
FIG. 2 is a configuration diagram illustrating an interior of a shield box illustrated in FIG. 1.
FIG. 3 is a block diagram illustrating a functional configuration of the X-ray inspection device in FIG. 1.
FIG. 4 is a schematic diagram for explaining an outline of a method for generating a simulated defective image.
FIG. 5(a) is a schematic diagram illustrating a plurality of detection elements arranged along an intersecting direction and FIG. 5(b) is an enlarged schematic diagram of the plurality of detection elements in FIG. 5(a).
FIG. 6 is a schematic diagram illustrating an example of calculation of a transmission distance of X-rays.
FIG. 7 is a schematic diagram for explaining change of pixel values based on an attenuation rate of X-rays of a substance corresponding to virtual foreign object.
FIG. 8 is a flowchart illustrating an operation of the X-ray inspection device.
FIG. 9 is a flowchart illustrating a process of an intermediate inspection of the X-ray inspection device.
FIGS. 10(a) and 10(b) are diagrams for explaining a problem of an example in the related art.
FIG. 11 is a diagram for explaining a problem of an example in the related art.

### Description of Embodiments

An embodiment of the present invention will be described below in detail with reference to the attached drawings. Note that, in the description of the drawings, the same or equivalent elements are denoted by the same reference signs and redundant descriptions thereof are omitted.

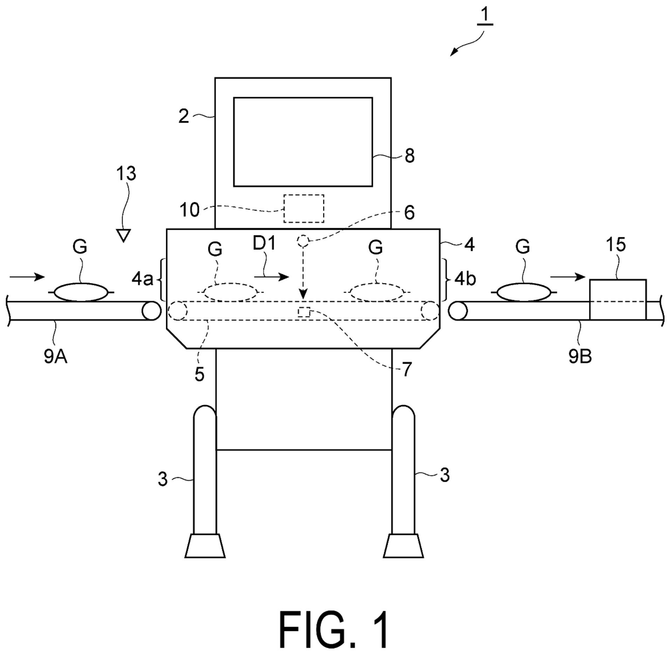

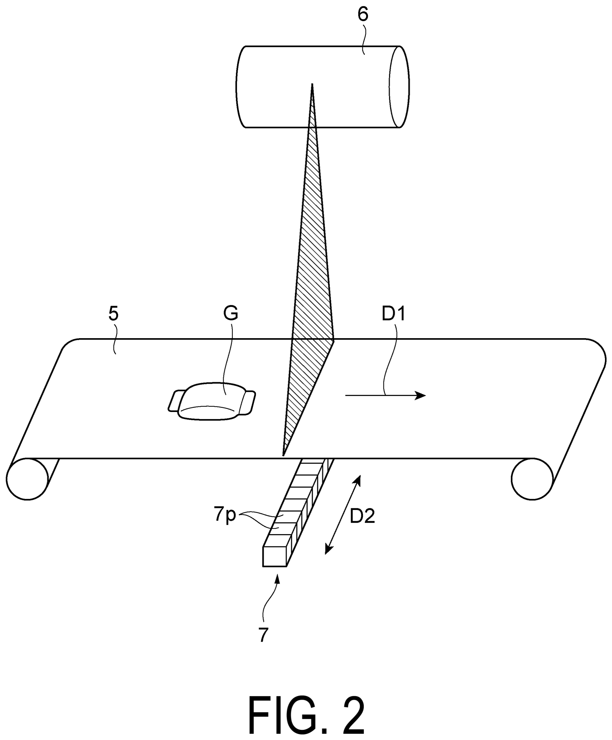

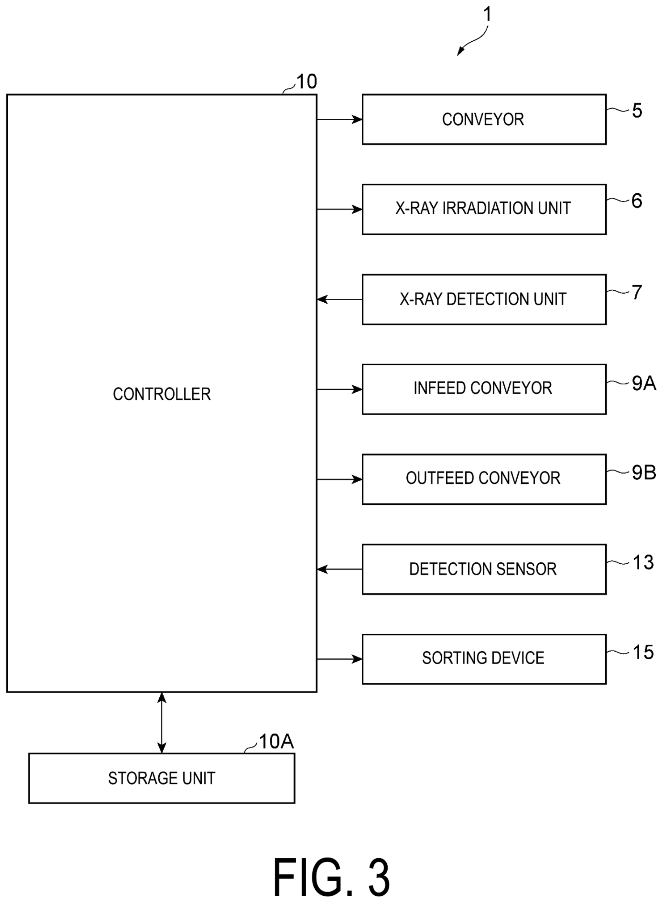

As illustrated in FIGS. 1 to 3, an X-ray inspection device 1 includes a device main body 2, support legs 3, a shield box 4, a conveyor 5 (a conveyance unit), an X-ray irradiation unit 6 (an irradiation unit), an X-ray detection unit 7 (a sensor unit), a display 8, a controller 10 (an image generation unit, an inspection unit, and a checking unit), and a storage unit 10A (the checking unit). The X-ray inspection device 1 acquires an inspection image IM of an article G while conveying the article G, and performs foreign object contamination inspection on the article G based on the inspection image IM.

The article G before the inspection is carried into the X-ray inspection device 1 by an infeed conveyor 9A, and the article G after the inspection is carried out from the X-ray inspection device 1 by an outfeed conveyor 9B. In a normal (in-production) foreign object inspection that is not an intermediate inspection (checking) described below, the article G that has been determined as not being a defective article by the X-ray inspection device 1 is sorted out of a production line (out of a system) by a sorting device (sorting unit) 15 disposed downstream of the outfeed conveyor 9B, and the article G that has been determined as not being a non-defective article by the X-ray inspection device 1 passes through the sorting device 15 as is.

The shield box 4 is formed with an infeed port 4a and an outfeed port 4b. The article G before the inspection is carried into the shield box 4 from the infeed conveyor 9A via the infeed port 4a, and the article G after the inspection is carried out from the shield box 4 to the outfeed conveyor 9B via the outfeed port 4b. A detection sensor 13 detects the article G conveyed by the infeed conveyor 9A.

The conveyor 5 is disposed in the shield box 4, and conveys the article G along a conveying direction D1 from the infeed port 4a to the outfeed port 4b. The X-ray irradiation unit 6 is disposed in the shield box 4, and irradiates the article G conveyed by the conveyor 5 with X-rays.

The X-ray detection unit 7 is disposed in the shield box 4, and detects the X-rays emitted from the X-ray irradiation unit 6 and transmitted through the article G and the conveyor 5. The X-ray detection unit 7 includes a plurality of detection elements 7p arranged along an intersecting direction D2 that horizontally intersects with the conveying direction D1 of the conveyor 5. The X-ray detection unit 7 is configured as a line sensor including, for example, a plurality of photodiodes one-dimensionally arranged along a horizontal direction perpendicular to the conveying direction D1, and scintillators disposed on an X-ray incident side with respect to the respective photodiodes. The controller 10 acquires an electric signal detected by the X-ray detection unit 7.

The display 8 is provided at the device main body 2. The display 8 includes a display screen as a touch panel and a speaker. The display 8 functions as an operation input unit that receives input of various conditions via the display screen. The display 8 functions as a display unit that displays an inspection result of the X-ray inspection device 1 and the like via the display screen.

The controller 10 is disposed in the device main body 2, and controls the operation of each component of the X-ray inspection device 1. The controller 10 includes a processor such as a CPU, a memory such as a ROM and a RAM, and a storage such as an SSD. The controller 10 may be configured as hardware with an electronic circuit or the like. The storage unit 10A is configured with any one or more of an HDD, a flash memory, and the like. The storage unit 10A may be provided in the device main body 2 or may be provided to be communicable with the controller 10 via a network.

The controller 10 generates an inspection image including the article G from a detection result of the X-rays detected by the X-ray detection unit 7. The inspection image is an image having pixel values corresponding to shading according to the brightness of the X-rays transmitted through the article G.

The controller 10 generates a simulated defective image including virtual foreign object by changing pixel values of some of the pixels constituting the inspection image, and checks the reliability of the inspection based on the simulated defective image. In a production site in which the X-ray inspection device 1 is used, during normal operation of the X-ray inspection device 1 that inspects the article G during production of the article G, an intermediate inspection is performed to check the reliability of the inspection, such as checking whether a target foreign object is correctly detected in the X-ray inspection device 1, for example, at predetermined intervals. The controller 10 generates a simulated defective image including virtual foreign object, and automatically checks the reliability of the inspection based on the simulated defective image, for example, at predetermined intervals during normal operation of the X-ray inspection device 1.

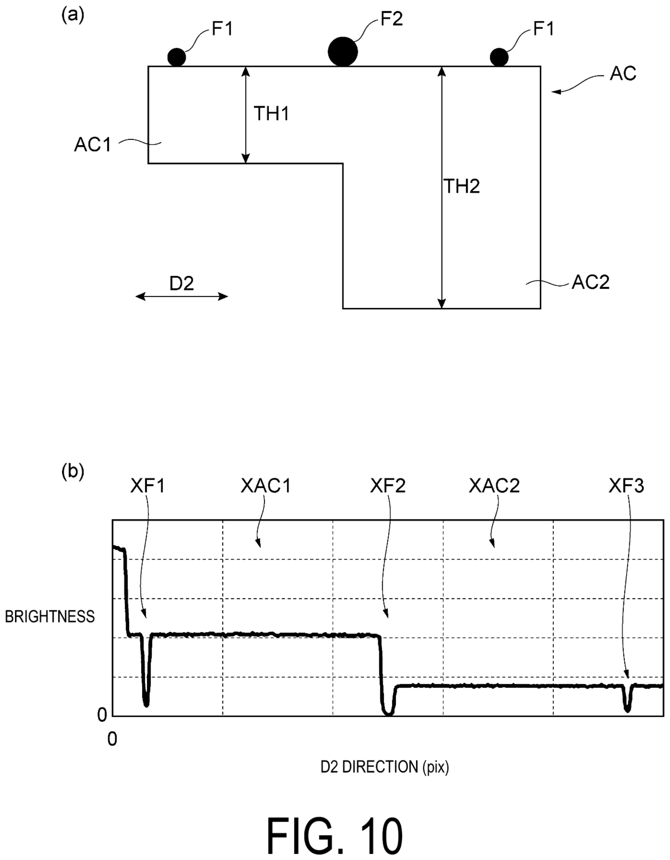

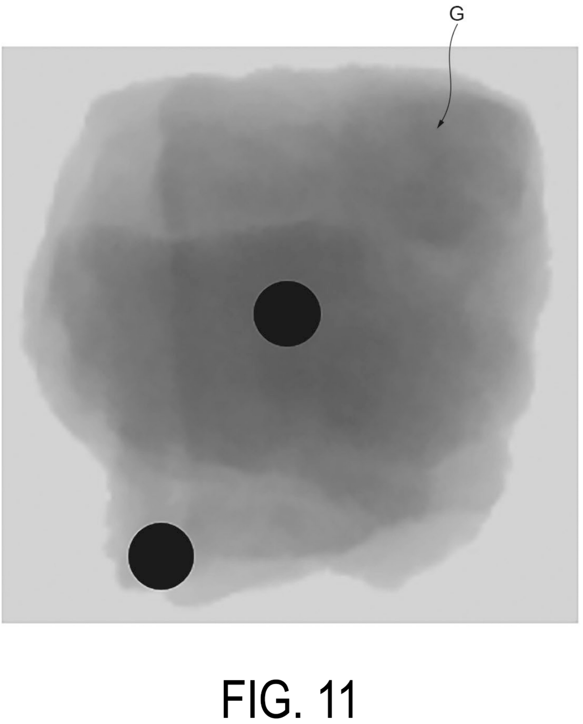

FIG. 10(a) illustrates an acrylic member AC having an upper surface to which pieces of actual foreign object F1 and F2 are attached. The acrylic member AC includes a portion AC1 having a thickness TH1 and a portion AC2 having a thickness TH2 which is larger than the thickness TH1. The pieces of foreign object F1 and F2 are, for example, stainless-steel balls, and the diameter of the foreign object F2 is larger than the diameter of the foreign object F1. Two pieces of foreign object F1 are attached to the portion AC1 and the portion AC2 on a one-to-one basis. One piece of foreign object F2 is attached to a boundary portion between the portion AC1 and the portion AC2. FIG. 10(b) illustrates a detection result of transmitted X-rays when the acrylic member AC to which the pieces of foreign object F1 and F2 are attached is irradiated with X-rays from the upper side in FIG. 10(a). As illustrated in FIG. 10(b), the brightness of the transmitted X-rays is different between the portion AC1 and the portion AC2, and a brightness XAC2 corresponding to the portion AC2 is lower than a brightness XAC1 corresponding to the portion AC1. A brightness XF1 and a brightness XF3 have different brightness waveforms even though they correspond to the pieces of foreign object F1 having the same diameter. Here, when an image of a circle uniformly filled with black as in FIG. 10(b) is used, it is not possible to reproduce that the same foreign object have different brightness waveforms of the transmitted X-rays. For example, as in FIG. 11, when an image of a circle uniformly filled with black is attached as virtual foreign object at two portions of an article which are different from each other in thickness, it is not possible in a normal situation to sufficiently reproduce the brightness of the X-rays being different between the two portions.

Thus, the controller 10 of the present embodiment changes the pixel values of some of the pixels constituting the inspection image IM generated at the time of inspection of the article G based on the attenuation rate of X-rays of a substance corresponding to the virtual foreign object. As an example, the controller 10 changes the pixel values based on the attenuation rate of the X-rays calculated according to each of the plurality of detection elements 7a, 7b, and the like of the X-ray detection unit 7.

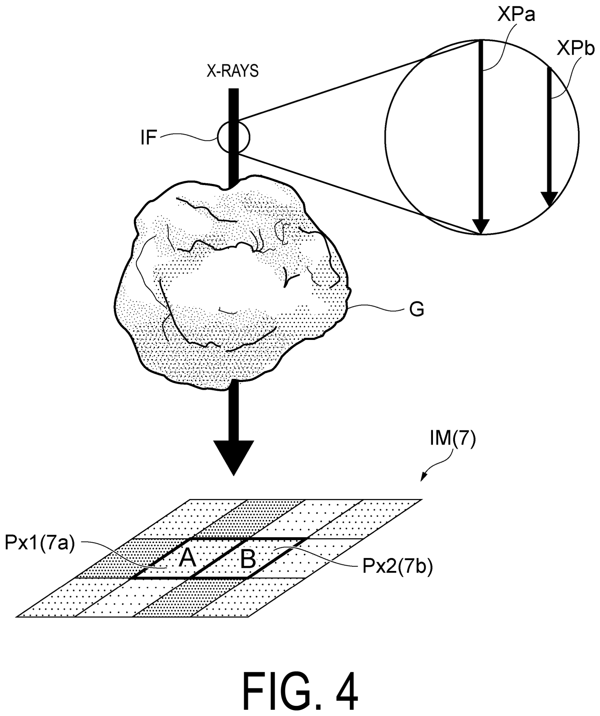

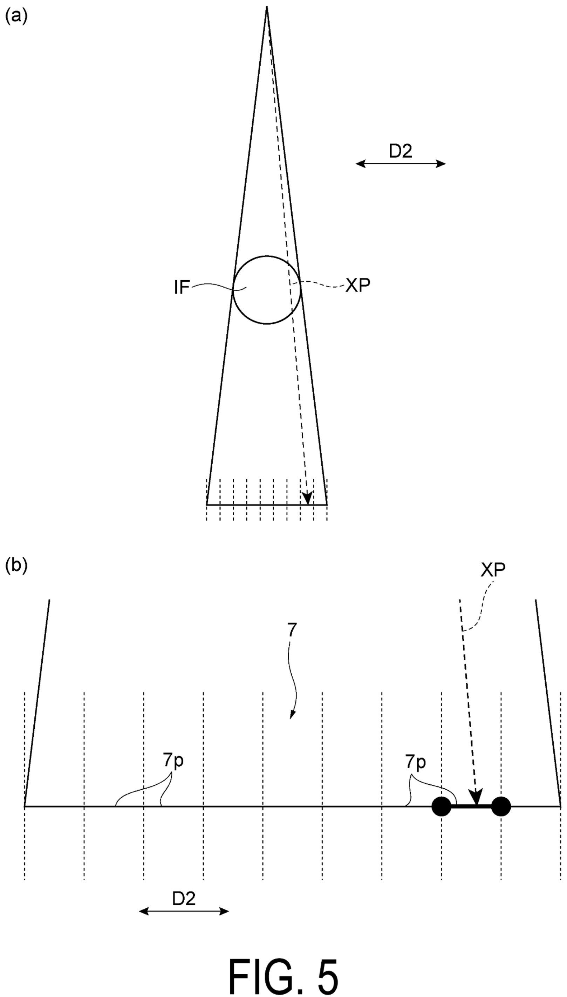

FIG. 4 is a schematic diagram for explaining an outline of a method for generating a simulated defective image. In the example of FIG. 4, virtual foreign object IF is a stainless-steel ball having a predetermined diameter. The controller 10 assumes a state in which the virtual foreign object IF is virtually irradiated with X-rays, and estimates the brightness of virtually-transmitted X-rays. The controller 10 estimates the brightness of the virtually-transmitted X-rays, for example, on the assumption that an actual foreign object having the same shape and made of the same material as the virtual foreign object IF is present at the position of the virtual foreign object IF. As illustrated in FIG. 5(a) and FIG. 5(b), it can be assumed that when the virtual foreign object IF is virtually irradiated with X-rays, the X-rays transmitted through the foreign object IF reaches the plurality of detection elements 7p of the X-ray detection unit 7. It is conceivable that such a virtual X-ray transmission path XP is present for each of the plurality of detection elements 7p.

FIG. 4 illustrates a part of the inspection image IM including the article G generated from a detection result of the X-rays transmitted through the article G detected by the X-ray detection unit 7. The inspection image IM includes pixels Px1 and Px2 corresponding to the plurality of detection element 7a and 7b of the X-ray detection unit 7. In FIG. 4, pixel values A and B of the pixels Px1 and Px2 are visually represented by shading with hatching in regions surrounded by thick lines for convenience of description. In the example of FIG. 4, the pixel values A and B of the pixels Px1 and Px2 are pixel values that are not affected by the virtual foreign object IF. For example, when the virtual foreign object IF is further arranged on a path of the X-rays transmitted through the article G in the inspection image IM including the article G of FIG. 4, transmission paths XPa and XPb can be assumed as the transmission paths XP as illustrated in FIG. 5(a) and FIG. 5(b). Here, the transmission paths XPa and XPb mean paths of the X-rays that transmit through the virtual foreign object IF, transmit through the article G, and reach the pixels Px1 and Px2, respectively. Paths of the X-rays such as the transmission paths XPa and XPb can be assumed to correspond to the respective detection elements 7p in a range corresponding to a position at which the virtual foreign object IF is arranged. The controller 10 calculates the attenuation rate of the X-rays virtually transmitted through the virtual foreign object IF for each of the virtual transmission paths XPa and XPb corresponding to each of the plurality of detection elements 7a, 7b, and the like of the X-ray detection unit 7, and changes a pixel value based on the attenuation rate of the X-rays.

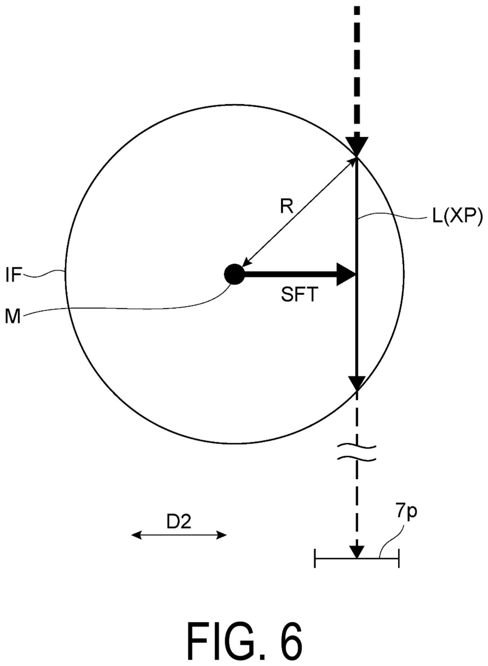

The controller 10 may change the pixel values based on the transmission distance of the X-rays in the virtual foreign object IF, the density of a substance corresponding to the virtual foreign object IF, and the mass absorption coefficient of the substance corresponding to the virtual foreign object IF. The transmission distance may be a length of a portion of virtual straight line connecting the X-ray irradiation unit 6 and the X-ray detection unit 7 and passing through the virtual foreign object IF. For example, as illustrated in FIG. 6, the transmission distance may be a length L of the transmission path XP. When the virtual foreign object IF has a spherical shape, the length L may be geometrically calculated based on a radius R of the virtual foreign object IF and a shift amount SFT. The shift amount SFT is a separation distance of the transmission path XP from a center M of the virtual foreign object IF along the intersecting direction D2. The position of the center M of the virtual foreign object IF may be coordinate values determined in accordance with setting of where to arrange the virtual foreign object IF in the inspection image IM. The position of the transmission path XP may be coordinate values determined in accordance with the position of the detection element 7p whose pixel value is to be changed (estimated). The inclination of the transmission path XP with respect to the X-ray detection unit 7 illustrated in FIG. 5 may or may not be considered. When the inclination is not considered, an arrow of the shift amount SFT and an arrow of the transmission path XP may be orthogonal to each other in FIG. 6.

The density of the substance corresponding to the virtual foreign object IF and the mass absorption coefficient of the substance corresponding to the virtual foreign object IF are examples of object characteristics for calculating the attenuation rate of the X-rays. In order to calculate the attenuation rate of the X-rays, only one of these object characteristics may be used, or another object characteristic may be used. The object characteristics for calculating the attenuation rate of the X-rays may be stored in the storage unit 10A, for example, as parameters. The substance corresponding to the virtual foreign object IF is, for example, stainless steel. The substance corresponding to the virtual foreign object IF is not particularly limited, and may be selected in accordance with the purpose of the intermediate inspection.

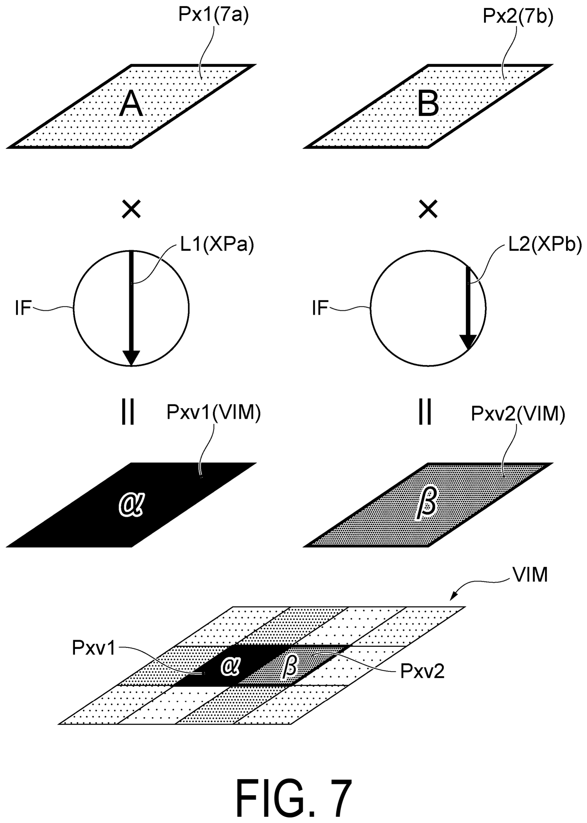

As illustrated in FIG. 7, the controller 10 calculates the attenuation rate of the X-rays for each of the plurality of detection elements 7p, for example, by multiplying transmission distances L1 and L2 of the X-rays in the virtual foreign object IF, the density of the substance corresponding to the virtual foreign object IF, and the mass absorption coefficient of the substance corresponding to the virtual foreign object IF. For example, the controller 10 multiplies the pixel values A and B of the pixels Px1 and Px2 in FIG. 4 by the calculated attenuation rate of the X-rays, thereby obtaining pixel values α and β. The pixel values α and β are pixel values of pixels Pxv1 and Pxv2 constituting a simulated defective image VIM. The pixels Pxv1 and Pxv2 are pixels corresponding to the pixels Px1 and Px2 in the simulated defective image VIM. The pixel values α and β are pixel values simulating an event in which the X-rays transmitted through the article G are further attenuated by the virtual foreign object IF. The controller 10 changes the pixel values of the pixels Px1 and Px2 to the pixel values α and β, thereby generating the simulated defective image VIM including the pixels Pxv1 and Pxv2.

Note that the controller 10 may extract an outer shape of the article G included in the inspection image IM and generate the simulated defective image VIM by changing the pixel values of some of the pixels inside the extracted outer shape of the article G (a dark portion having the outer shape of the article G as an edge, corresponding to an upper portion of an object to be inspected). The controller 10 acquires the inspection image IM of the article G conveyed from the upstream side, and extracts the outer shape of the article G. The outer shape of the article G can be extracted by a known method such as binarization, sharpening, or pattern matching.

The virtual foreign object IF is not limited to being attached to or mixed in the article G, but may be attached to a range where the article G is not present in a container on which the article G is placed. In that case, pixel values according to the brightness of the X-rays that are not transmitted through the article G but are transmitted through the container may be used instead of the pixel values A and B of the pixels Px1 and Px2. The controller 10 may generate the simulated defective image VIM by changing the pixel values of some of the pixels on the outer side of the extracted outer shape of the article G (a light portion having the outer shape of the article G as an edge, corresponding to an upper portion of the object to be inspected), some of the pixels on a boundary line (a weak edge portion) of the extracted outer shape of the article G, some of the pixels on the outer side of an extracted outer shape of the container on which the article G is placed (a light portion having the outer shape of the container as an edge, corresponding to portions other than the object to be inspected), and some of the pixels on the boundary line (a strong edge portion) of the extracted outer shape of the container on which the article G is placed.

Where to arrange the virtual foreign object IF in the inspection image IM may be selected from the above-described arrangement examples in accordance with an input operation of an operator in consideration of locations having an impact on inspection performance or may be randomly selected by the controller 10, or arrangement patterns may be set in advance in the controller 10. The virtual foreign object IF may be arranged in the inspection image IM by directly designating coordinates in the inspection image IM by an input operation of the operator. The input operation of the operator is not particularly limited, and may be an operation of touching or clicking a desired location in the inspection image IM being displayed on the display 8, or may be an operation of inputting coordinate values. Since the virtual foreign object IF can be arranged in this way, the reproducibility of the position of the virtual foreign object IF is higher than that in a case where a test piece is manually attached. As a result, even in an inspection of the article G in which a sensitivity difference occurs such that the detection of foreign object becomes difficult depending on the position of the test piece, the sensitivity difference (variation) can be reduced, and thus sensitivity evaluation at a specific position can be easily quantified.

The storage unit 10A may store a plurality of pieces of virtual foreign object IF that differ from each other in size, shape or density. Here, the expression of "differ in size, shape or density" means "differ in size", "differ in shape", "differ in density", "differ size and shape", "differ shape and density", "differ in size and density", or "differ in size, shape and density." The controller 10 may change the pixel values based on the attenuation rate of the X-rays of a substance corresponding to the virtual foreign object IF selected from the plurality of pieces of virtual foreign object IF. For example, the controller 10 can select a type of the virtual foreign object IF to be used for the intermediate inspection from the plurality of pieces of virtual foreign object IF stored in the storage unit 10A in accordance with an input operation of the operator, or a preset intermediate inspection pattern or the like. In a case where the preset intermediate inspection pattern or the like is followed, the type of the virtual foreign object IF is automatically selected, and thus the detection accuracy for foreign object in a specific inspection image IM is easily quantified for each type of the virtual foreign object IF, as compared to a case where a test piece is manually attached.

The controller 10 checks the reliability of the inspection based on the simulated defective image VIM generated as described above. Here, "checking the reliability of the inspection" refers to, for example, checking whether foreign object identified from any one or a plurality of elements among elements of the foreign object specified by size, thickness, material, and the like can be detected. Elements to be checked (i.e., a performance requirement) can be set via the display 8. The controller 10 determines whether a predetermined performance requirement is satisfied based on the simulated defective image VIM.

When a preset time (e.g., one hour) has elapsed since the start of production of the articles G (since the start of inspection) or when a preset number of articles G (e.g., 1000 pieces) have been inspected, the controller 10 generates the simulated defective image VIM and automatically performs checking. In other words, the controller 10 executes normal inspection of inspecting whether foreign object is included in the article G based on the inspection image IM until a preset time (e.g., one hour) has elapsed or until a preset number of articles G (e.g., 1000 pieces) have passed through the X-ray inspection device 1 since the start of production of the articles G. The controller 10 generates the simulated defective image VIM only after the preset time has elapsed or the preset number of articles G have passed through the X-ray inspection device 1 since the start of the production of the articles G.

The controller 10 determines that there is a problem in the reliability of the inspection if an inspection result indicating that no foreign object is included is obtained through the inspection based on the simulated defective image VIM, and determines that there is no problem in the reliability of the inspection if an inspection result indicating that foreign object is included is obtained through the inspection based on the simulated defective image VIM. In this way, the controller 10 checks the reliability of the inspection based on the simulated defective image VIM.

The controller 10 controls the sorting by the sorting device 15 disposed downstream of the X-ray inspection device 1. If the article G has been determined as being normal (no foreign object is included) in the above-described normal inspection, the controller 10 conveys the article G conveyed by the outfeed conveyor 9B to the downstream side without operating the sorting device 15. If the article G is determined as being abnormal (foreign object is included) in the above-described normal inspection, the controller 10 operates the sorting device 15 to sort the article G to the outside of the production line (in a direction different from a direction in which the article G is conveyed in the conveyance unit). Examples of the sorting device 15 include an arm-type sorting device using an arm, a drop-up belt-type sorting device, a pusher-type sorting device using a pusher device, a drop-flap type sorting device, an air-jet type sorting device, and a fin-type sorting device.

If an inspection result indicating that no foreign object is included is obtained in the checking of the reliability of the above-described inspection based on the simulated defective image VIM, in other words, if it is determined that there is a problem in the reliability of the inspection, the controller 10 stops the conveyance of the article G by the infeed conveyor 9A, the conveyor 5, and the outfeed conveyor 9B. That is, in this case, the controller 10 determines that the present inspection by the X-ray inspection device 1 does not satisfy the performance requirement, and stops the operation of the production line. The controller 10 may notify an operator or the like that there is a problem in the checking result of the reliability of the inspection by, for example, an indication on the display 8.

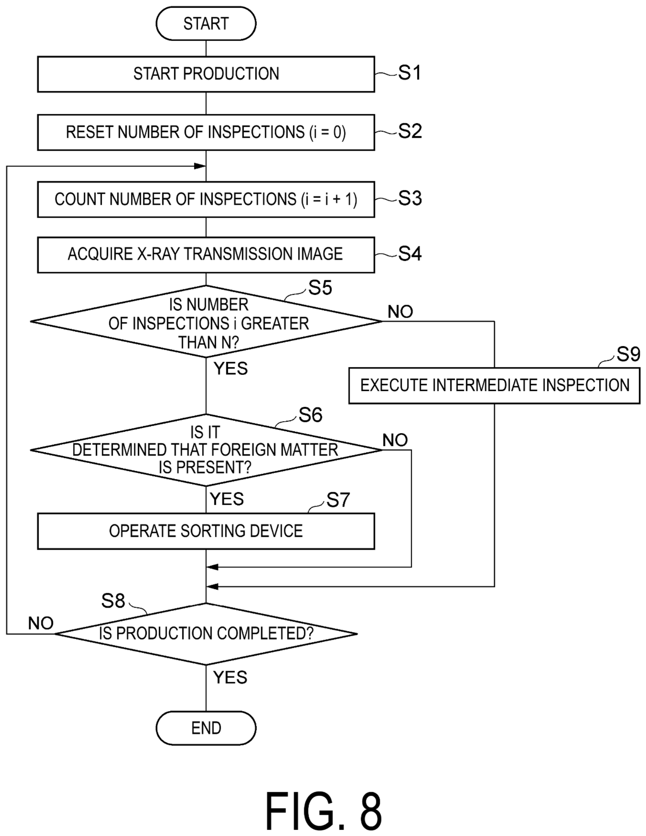

Next, the operation of the X-ray inspection device 1 will be described. As illustrated in FIG. 8, when the production of the articles G is started (step S1), the controller 10 resets a counter that counts the number of inspections (step S2). The controller 10 counts the articles G conveyed to the X-ray inspection device 1 (step S3). The controller 10 counts the articles G based on the detection result of the detection sensor 13 that detects the articles G flowing on the infeed conveyor 9A. The X-ray inspection device 1 acquires an inspection image (X-ray transmission image) IM of the article G conveyed (step S4). The controller 10 checks the number of inspections when the inspection image IM is acquired (step S5).

Upon confirming that the number of inspections i is smaller than a predetermined number N (e.g., N = 1000), the controller 10 executes the normal inspection of inspecting whether foreign object is included in the article G based on the inspection image IM (step S6). Here, upon determining that foreign object is included in the article G in the result of the normal inspection based on the inspection image IM (step S6: YES), the controller 10 operates the sorting device 15 (step S7) to discharge the corresponding article G to the outside of the system. Upon determining that no foreign object is included in the article G in the result of the normal inspection based on the inspection image IM (step S6: NO), the controller 10 causes the article G to be conveyed to the downstream side of the outfeed conveyor 9B without operating the sorting device 15.

Thereafter, the controller 10 determines whether the production of the articles G has been completed (step S8), and upon determining that the production of the articles G has been completed (step S8: YES), ends a series of processes. Accordingly, the series of processes in the X-ray inspection device 1 are completed. The end of the production of the articles G is determined, for example, based on whether the number of the articles G to be produced in one day has been reached. Upon determining that the production of the articles G has not been completed (step S8: NO), the controller 10 returns to step S3 and increases the number of inspections i by one. Thereafter, the controller 10 executes the steps after step S4.

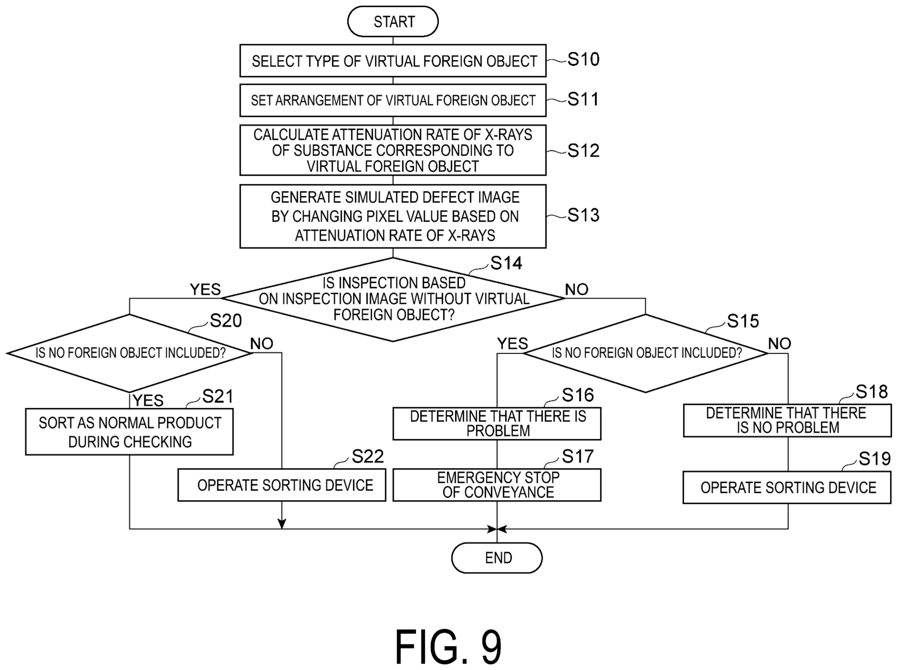

Upon confirming that the number of inspections i is equal to or greater than the predetermined number N (e.g., N = 1000), the controller 10 executes an intermediate inspection (step S9). As the intermediate inspection, as illustrated in FIG. 9, the controller 10 manually or automatically selects a type of virtual foreign object IF (step S10) and manually or automatically sets the arrangement of the virtual foreign object IF (step S11), as described above. As described above, the controller 10 calculates an attenuation rate of X-rays of a substance corresponding to the virtual foreign object IF (step S12), and generates a simulated defective image VIM by changing pixel values based on the attenuation rate of the X-rays (step S13).

In a case where the inspection is not based on an inspection image that does not include virtual foreign object, the controller 10 checks the reliability of the inspection using the simulated defective image VIM (step S14: NO). Upon determining that no foreign object is included in the inspection using the simulated defective image VIM (step S15: YES), the controller 10 determines that there is a problem in the reliability of the inspection (step S16) and stops the conveyance of the article G by the infeed conveyor 9A, the conveyor 5, and the outfeed conveyor 9B (step S17). Accordingly, the process of the intermediate inspection is completed.

On the other hand, upon determining that foreign object is included in the inspection using the simulated defective image VIM (step S15: NO), the controller 10 determines that there is no problem in the reliability of the inspection (step S18), and operates the sorting device 15 to discharge the corresponding article G to the outside of the system (step S19).

In contrast, in a case where the inspection is based on an inspection image that does not include virtual foreign object, the controller 10 can perform checking without using the simulated defective image VIM (step S14: YES). Upon determining that no foreign object is included in the checking without using the simulated defective image VIM (step S20: YES), the controller 10 operates the sorting device 15 to sort the article G as a normal product during the checking in a direction different from a direction in step S19 and step S22 (step S21). On the other hand, upon determining that foreign object is included in the checking without using the simulated defective image VIM (step S20: NO), the controller 10 operates the sorting device 15 to discharge the corresponding article G to the outside of the system (step S22). Accordingly, the process of the intermediate inspection is completed. Thereafter, the controller 10 returns to the process of FIG. 8, and determines whether the production of the articles G has been completed in step S8 described above.

As described above, in the X-ray inspection device 1, the controller 10 generates the simulated defective image VIM including the virtual foreign object IF by changing the pixel values of some of the pixels constituting the inspection image. The controller 10 changes the pixel values based on the attenuation rate of the X-rays of the substance corresponding to the virtual foreign object IF. Accordingly, since the virtual foreign object IF is rendered in the simulated defective image VIM in accordance with the attenuation rate of the X-rays of the substance, the test piece can be more accurately reproduced with the virtual foreign object IF in the simulated defective image VIM, as compared with a case where, for example, an image of foreign object imaged in advance or an image of a circle uniformly filled with black is used as the virtual foreign object IF.

The controller 10 changes the pixel values based on a transmission distance L of the X-rays in the virtual foreign object IF, the density of the substance or the mass absorption coefficient of the substance. Here, the expression of "based on a transmission distance L, the density of the substance, or the mass absorption coefficient" means "based on a transmission distance L", "based on the density of the substance", "based on the mass absorption coefficient", "based on a transmission distance L and the density of the substance", "based on the density of the substance and the mass absorption coefficient", "based on a transmission distance L and the mass absorption coefficient", or "based on a transmission distance L, the density of the substance, and the mass absorption coefficient." Thus, the transmission distance, according to the type, shape and the like of the substance designated as the virtual foreign object IF, the density of the substance or the mass absorption coefficient of the substance is used, and thus the attenuation rate of the X-rays of the substance in the simulated defective image VIM can be calculated with higher accuracy.

The transmission distance L is a length of a portion of virtual straight line connecting the X-ray irradiation unit 6 and the X-ray detection unit 7 and passing through the virtual foreign object IF. The transmission distance L can be geometrically calculated.

The X-ray detection unit 7 includes the plurality of detection elements 7p arranged along the intersecting direction D2 that horizontally intersects with the conveying direction D1 of the conveyor 5. The controller 10 changes the pixel values based on the attenuation rate of the X-rays calculated according to each of the plurality of detection elements 7p. Thus, since the virtual foreign object IF can be rendered at a resolution corresponding to the inspection image, the test piece can be easily reproduced with the virtual foreign object IF with high accuracy.

The storage unit 10A stores information on a plurality of pieces of virtual foreign object IF that differ from each other in size, shape or density. The controller 10 changes the pixel values based on the attenuation rate of the X-rays of the substance corresponding to the virtual foreign object IF selected from the plurality of pieces of virtual foreign object IF. Thus, the simulated defective image VIM corresponding to any of the plurality of pieces of virtual foreign object IF stored in advance can be generated to perform the checking.

The controller 10 determines that there is a problem in the reliability of the inspection if an inspection result indicating that no foreign object is included is obtained by the inspection based on the simulated defective image VIM. Thus, it is possible to detect an abnormality in which it is determined that foreign object has not been included, although it should be determined in a normal situation that foreign object has been included.

When a preset time has elapsed or when a preset number of articles G have been inspected, the controller 10 generates the simulated defective image VIM and automatically performs the checking. Thus, the checking of the reliability of the inspection is automatically executed according to a preset rule. As a result, the burden on an operator can be reduced.

The controller 10 extracts an outer shape of the article G included in the inspection image and generates the simulated defective image VIM by changing the pixel values of some of the pixels inside the extracted outer shape. Accordingly, the simulated defective image VIM generated by the controller 10 is an image close to the inspection image IM acquired when foreign object is mixed in the article G produced in the production line. Therefore, the checking of the reliability of the inspection is performed simulatively based on the inspection image IM that is actually acquired when the foreign object is mixed in the article G produced in the production line, and thus the accuracy of the checking can be improved.

If an inspection result indicating that no foreign object is included is obtained by the inspection based on the inspection image without the virtual foreign object IF during execution of the intermediate inspection, the controller 10 controls the sorting device 15 to sort the article G in a direction different from a direction in which the article G that is normal without foreign object is sorted by the sorting device 15 during non-execution of the intermediate inspection. If an inspection result indicating that no foreign object is included is obtained by the inspection based on the simulated defective image VIM during execution of the intermediate inspection, the controller 10 stops the conveyance of the article G by the infeed conveyor 9A, the conveyor 5, and the outfeed conveyor 9B. Accordingly, the normal article that has been determined as not including the foreign object during the execution of the intermediate inspection can be sorted separately from the normal article during the non-execution of the intermediate inspection (during normal operation). Further, when it is determined that the inspection has not been correctly performed, the conveyance by the infeed conveyor 9A, the conveyor 5, and outfeed conveyor 9B is stopped, and thus it is possible to prevent the article G including the foreign object from being processed as a normal article after the intermediate inspection.

Although an embodiment of the present invention has been described above, the present invention is not necessarily limited to the above-described embodiment, and various modifications can be made without departing from the gist of the present invention.

In the above-described embodiment, the controller 10 changes the pixel values using each of the transmission distance of the X-rays in the virtual foreign object IF, the density of a substance corresponding to the virtual foreign object IF and the mass absorption coefficient of the substance corresponding to the virtual foreign object IF, but may change the pixel values based on at least one of them.

In the above-described embodiment, the transmission distance L is a length of a portion of virtual straight line connecting the X-ray irradiation unit 6 and the X-ray detection unit 7 and passing through the virtual foreign object IF, but is not limited thereto, and the transmission distance may be given in the form of a predetermined parameter corresponding to the virtual foreign object.

In the X-ray inspection device 1 of the above-described embodiment and the above described modification examples, the X-ray detection unit 7 including one line sensor has been described as an example, but the X-ray detection unit 7 may be configured as a multi-energy sensor including a first line sensor and a second line sensor having different energy bands that can be mutually detected. The X-ray detection unit 7 may be capable of detecting X-rays by a photon counting method. The X-ray detection unit 7 may be a direct conversion type detection unit or an indirect conversion type detection unit. These sensors are arranged, for example, in a direction orthogonal to at least the conveying direction of the conveyor 5 and an up-down direction (width direction). These elements may be arranged not only in the above-described width direction but also in the above-described conveying direction.

In the above-described embodiment, the storage unit 10A stores the information on the plurality of pieces of virtual foreign object IF, but is not limited to this example, and may store information on one piece of virtual foreign object.

In the above-described embodiment, the inspection based on the inspection image without the virtual foreign object IF is performed during the execution of the intermediate inspection, but this inspection may be omitted and S20 to S22 in FIG. 9 may be omitted.

The description of the operation of the X-ray inspection device 1 of the above-described embodiment, as illustrated in FIG. 4, describes an example in which the controller 10 determines whether to execute the checking of the reliability of the inspection based on the number of inspections, but this is not a limitation. For example, the controller 10 may determine whether to execute the checking of the reliability of the inspection based on an elapsed time (e.g., one hour) since the start of the inspection.

The above-described embodiment describes an example in which the controller 10 generates the simulated defective image VIM and automatically performs the checking of the reliability of the inspection when a preset time has elapsed or when a preset number of articles G have been inspected since the start of production of the articles G, but the checking of the reliability of the inspection may be executed in response to an instruction from an operator.

### Reference Signs List

1 X-ray inspection device; 5 Conveyor (conveyance unit); 6 X-ray irradiation unit (irradiation unit); 7 X-ray detection unit (sensor unit); 7a, 7b, 7p Detecting element; 10A Storage unit (checking unit); 15 Sorting device (sorting unit); D1 Conveying direction; D2 Intersecting direction; G Article; VI, VIM Simulated defective image.

## Claims

1. An X-ray inspection device (1), comprising:
a conveyance unit (5) configured to convey an article;
an irradiation unit (6) configured to irradiate the article conveyed by the conveyance unit (5) with X-rays;
a sensor unit (7) configured to detect the X-rays;
an image generation unit configured to generate an inspection image including the article from a detection result of the X-rays detected in the sensor unit (7);
an inspection unit configured to perform an inspection to determine whether foreign object is included in the article based on the inspection image; and
a checking unit configured to:
generate a simulated defective image including a virtual foreign object by changing pixel values of part of pixels that constitute the inspection image and,
perform checking of reliability of the inspection based on the simulated defective image, wherein
the checking unit is configured to change the pixel value based on an attenuation rate of the X-rays of a substance corresponding to the virtual foreign object.

2. The X-ray inspection device (1) according to claim 1, wherein the checking unit is configured to change the pixel values based on at least one of a transmission distance of the X-rays in the virtual foreign object, a density of the substance and a mass absorption coefficient of the substance.

3. The X-ray inspection device (1) according to claim 2, wherein the transmission distance is a length of a portion of a virtual straight line connecting the irradiation unit (6) and the sensor unit (7) and passing through the virtual foreign object.

4. The X-ray inspection device (1) according to any one of claims 1 to 3, wherein
the sensor unit (7) includes a plurality of detection elements arranged along an intersecting direction that horizontally intersecting a conveying direction of the conveyance unit (5), and
the checking unit is configured to change the pixel values based on the attenuation rate of the X-rays calculated according to each of the plurality of detection elements.

5. The X-ray inspection device (1) according to any one of claims 1 to 4, wherein
the checking unit is configured to:
store information on a plurality of virtual foreign objects that differ from each other in at least one of size, shape and density, and
change the pixel values based on the attenuation rate of the X-rays of a substance corresponding to the virtual foreign object selected from the plurality of the virtual foreign objects.

6. The X-ray inspection device (1) according to any one of claims 1 to 5, wherein the checking unit is configured to determine that there is a problem in the reliability of the inspection if an inspection result indicating that the foreign object is not included is obtained by the inspection based on the simulated defective image.

7. The X-ray inspection device (1) according to any one of claims 1 to 6, wherein the checking unit is configured to generate the simulated defective image and automatically perform the checking when a preset time has elapsed or when a preset number of a plurality of articles have been inspected.

8. The X-ray inspection device (1) according to any one of claims 1 to 7, wherein the checking unit is configured to extract an outer shape of the article included in the inspection image and generate the simulated defective image by changing the pixel values of some of the pixels inside the outer shape extracted.

9. The X-ray inspection device (1) according to any one of claims 1 to 8, wherein
the checking unit is configured to:
control a sorting unit to sort the article in a first direction different from a second direction if an inspection result indicating that the foreign object is not included is obtained by the inspection based on the inspection image without the virtual foreign object during execution of the checking, wherein the article, which is normal without the foreign object, is sorted into the second direction by the sorting unit during non-execution of the checking, and
stop conveyance of the article by the conveyance unit (5) if an inspection result indicating that the foreign object is not included is obtained by the inspection based on the simulated defective image during execution of the checking.
